# EUROPEAN PATENT SPECIFICATION

(11) **EP 2 981 148 B1**
(45) Date of publication and mention of the grant of the patent: **26.02.2020**
(21) Application number: 14859309.8
(22) Date of filing: 24.06.2014
(51) Int. Cl.: H04W 8/24

(54) **DEVICE MANAGEMENT METHOD, APPARATUS AND SYSTEM**
VERFAHREN, VORRICHTUNG UND SYSTEM FÜR EINE VERWALTUNGSVORRICHTUNG
PROCÉDÉ, APPAREIL ET SYSTÈME DE GESTION DE DISPOSITIF

(43) Date of publication of application: 03.02.2016
(73) Proprietor: Huawei Technologies Co., Ltd., Longgang District Shenzhen, Guangdong 518129 (CN)
(72) Inventor: HUANG, Jiejing, Shenzhen Guangdong 518129 (CN); WU, Huangwei, Shenzhen Guangdong 518129 (CN); XU, Zhe, Shenzhen Guangdong 518129 (CN)
(74) Representative: Goddar, Heinz J.
(86) International application number: PCT/CN2014/080608
(87) International publication number: WO 2015/196360

(56) References cited:
- CN-A- 1 691 022
- CN-A- 1 809 833
- CN-A- 1 989 780
- US-A1- 2009 253 409
- US-A1- 2014 011 541
- US-A1- 2014 024 361

## Description

### TECHNICAL FIELD

Embodiments of the present invention relate to the field of communications technologies, and in particular, to a method, an apparatus, and a system for managing a device.

### BACKGROUND

A kill switch (kill switch) for mobile phone anti-theft mainly refers to that, after a mobile phone of a user is stolen, an authorized user may remotely perform a destructive operation on the stolen mobile phone, and the operation is similar to remotely locking the mobile phone, remotely erasing all user data on the mobile phone, and making the stolen mobile phone unavailable.

However, although a function of a kill switch can effectively suppress an illegal second-hand transfer of a mobile phone and crack down on a theft behavior, but the function of the kill switch may probably be inappropriately used by a user. For example, when a device transferor legally transfers a mobile phone of the device transferor to a device transferee, the device transferor may still maliciously and remotely perform the function of the kill switch on the mobile phone and cause data of the legal device transferee to be maliciously cleared, thereby directly threatening security for using the mobile phone by the device transferee.

Therefore, in an existing mobile phone anti-theft technology, security for using a mobile phone by a legal transferee cannot be ensured.

US 2014/011541 A1 discloses techniques for use in transferring an assignment of a secure chip of a wireless device from a current subscription manager (SM) of a current mobile network operator (MNO) to a new SM of a new MNO. In one illustrative example, the current SM receives a request for transferring the assignment and produces transfer permission data in response. The transfer permission data includes an identifier of the secure chip, an identifier of the current SM, and a digital signature of the current SM. The current SM then sends to the secure chip a transfer permission message which includes the transfer permission data. The transfer permission data indicates a permission for the secure chip to transfer the assignment from the current SM to the new SM. Additional techniques are performed by the secure chip, and the new SM, as described.

CN 1 989 780 A discloses a method of unlocking a mobile terminal (TM) after a period of use and of ensuring that the first operator who sold the terminal receives adequate payment prior to the use thereof. For said purpose, the identity of the terminal is saved and a security algorithm, which is not known to the operator, is implemented in a security module (MS) which is introduced into a server (SOP) that is managed by the operator. After the period of use, the security module determines a secret key which is obtained by applying the terminal identity transmitted thereby and an operator code to the security algorithm, following a request transmitted by the service entity.; The determined secret key, which is encrypted at the terminal, is transmitted over the operator's radiocommunications network (RR) and decrypted in the mobile terminal so that it can be compared to the saved secret key in order for the mobile terminal to be unlocked when the compared secret keys are identical.

### SUMMARY

The present invention provides a method of claim 1 for a server to manage a device transfer, an apparatus of claim 2 for a server to manage a device transfer, a method of claim 3 for managing a device transfer and an apparatus of claim 4 for managing a device. When a transferor of a device legally transfers the device to a transferee of the device, the device is set to a to-be-activated state, so that the transferor of the device cannot maliciously clear data of the transferee of the device, and therefore, security for using the device by the transferee of the device is ensured.

A server in the embodiments of the present invention receives a device transfer request message, where the device transfer request message includes transferee information of a device and information about the device; a to-be-transferred instruction is sent to the device according to the device transfer request message, where the to-be-transferred instruction includes the transferee information; the to-be-transferred instruction is used to instruct the device to set an activated state of the device to a to-be-activated state; and after the device is set to the to-be-activated state, the device can be activated only by using specified user information, where the specified user information includes transferor information and/or the transferee information. In this way, by using the technical solutions described in the embodiments of the present invention, when a transferor of a device legally transfers the device to a transferee of the device, the device is set to a to-be-activated state, so that the transferor of the device cannot maliciously clear data of the transferee of the device, and therefore, security for using the device by the transferee of the device is ensured.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a method for managing a device according to an embodiment of the present invention;
FIG. 2 is a signaling diagram of a method for managing a device according to another embodiment of the present invention;
FIG. 3 is a schematic structural diagram of an apparatus for managing a device according to an embodiment of the present invention;
FIG. 4 is a schematic structural diagram of a server according to an embodiment of the present invention;
FIG. 5 is a schematic structural diagram of an apparatus for managing a device according to an embodiment of the present invention;
FIG. 6 is a schematic structural diagram of a device according to an embodiment of the present invention; and
FIG. 7 is a schematic structural diagram of a system for managing a device according to an embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

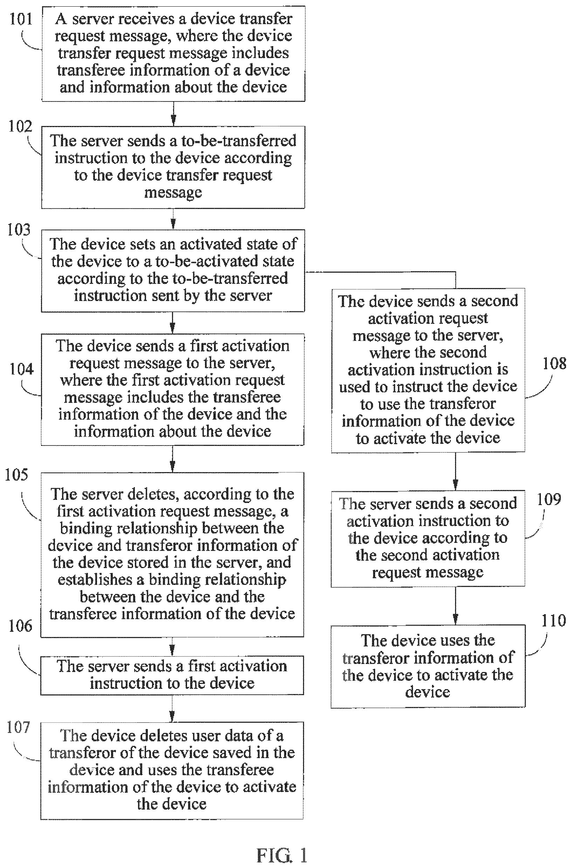

FIG. 1 is a schematic flowchart of a method for managing a device according to an embodiment of the present invention. As shown in FIG. 1, the method includes:
101. A server receives a device transfer request message, where the device transfer request message includes transferee information of the device and information about the device.

The server may receive the device transfer request message from a device that is used by a transferor of the device.

The transferee information of the device includes, for example, a user name of a transferee (for example, if the device is an Apple device, the transferee information is an Apple ID of the transferee; and if the device is an Android device, the transferee information is a Google account of the transferee).

Transferor information of the device includes, for example, a user name of the transferor, and the information about the device is, for example, an identity that uniquely identifies the device.

It should be noted that, before step 101, the method further includes the following:

The transferor of the device sends a third activation request message to the server by using the device, where the third activation request message includes the transferor information of the device and the information about the device.

The server establishes and saves a binding relationship between the transferor information and the information about the device according to the third activation request message.

Afterward, the server sends a third activation instruction to the device, where the third activation instruction is used to instruct the device to use the transferor information to activate the device, and then the device may save data generated when the transferor uses the device.

102. The server sends a to-be-transferred instruction to the device according to the device transfer request message.

The to-be-transferred instruction includes the transferee information of the device; the to-be-transferred instruction is used to instruct the device to set an activated state of the device to a to-be-activated state; and after the device is set to the to-be-activated state, the device can be activated only by using specified user information, where the specified user information includes the transferor information of the device and/or the transferee information of the device.

Optionally, during specific implementation, step 102, for example, includes:
sending, by the server according to the transferee information of the device, a transfer acknowledgement request message to a terminal of the transferee to which the transferee information points, so that the terminal of the transferee sends a transfer acknowledgement response message to the server; and sending, by the server, the to-be-transferred instruction to the device according to the transfer acknowledgement response message.

The terminal of the transferee may be, for example, a device that is used by the transferee.

In this embodiment of the present invention, it is assumed that ID information of the transferee is an email address of the transferee, the server may send, to the email address of the transferee, an email carrying the transfer acknowledgement request message, and the transferee may use the email address of the transferee to receive the email carrying the transfer acknowledgement request message and reply to the server by sending an email carrying the transfer acknowledgement response message.

103. The device sets an activated state of the device to a to-be-activated state according to the to-be-transferred instruction sent by the server.

In this case, the device is in the to-be-activated state, and the device can be activated only according to specified user information, where the specified user information includes the transferor information of the device and/or the transferee information of the device. For example, when a transaction succeeds, the device may be activated by using the transferee information, or when a transaction fails, the device may be activated by using the transferor information. Even if the device is stolen or lost, a third person cannot activate or use the device.

When a device transfer succeeds, the transferee may request activation of the device from the server by using the device, and after step 103, the method specifically includes:
104. The device sends a first activation request message to the server, where the first activation request message includes the transferee information of the device and the information about the device.

105. The server deletes, according to the first activation request message, the binding relationship between the device and the transferor information of the device stored in the server, and establishes a binding relationship between the device and the transferee information of the device.

106. The server sends a first activation instruction to the device.

The first activation instruction is used to instruct the device to delete user data of the transferor of the device saved in the device and use the transferee information of the device to activate the device.

107. The device deletes the user data of the transferor of the device saved in the device and uses the transferee information of the device to activate the device.

When the device transfer does not succeed, the transferor may request re-activation of the device from the server by using the device, and after step 103, the method further specifically includes:
108. The device sends a second activation request message to the server, where the second activation request message includes the transferor information of the device and the information about the device.

109. The server sends a second activation instruction to the device according to the second activation request message.

The second activation instruction is used to instruct the device to use the transferor information of the device to activate the device.

110. The device uses the transferor information of the device to activate the device.

A server in this embodiment of the present invention receives a device transfer request message, where the device transfer request message includes transferee information of the device and information about the device; a to-be-transferred instruction is sent to the device according to the device transfer request message, where the to-be-transferred instruction includes the transferee information of the device; the to-be-transferred instruction is used to instruct the device to set an activated state of the device to a to-be-activated state; and after the device is set to the to-be-activated state, the device can be activated only by using specified user information, where the specified user information includes transferor information of the device and/or the transferee information of the device. In this way, by using the technical solution described in this embodiment of the present invention, when a transferor of a device legally transfers the device to a transferee of the device, the device is set to a to-be-activated state, so that the transferor of the device cannot maliciously clear data of the transferee of the device, and therefore, security for using the device by the transferee of the device is ensured.

That the device is an iPhone and the server is an iCloud is used as an example in the following to describe a specific procedure of this embodiment of the present invention in detail. It should be noted that, the device described in this embodiment of the present invention includes but is not limited to an Apple product, and the server described in this embodiment of the present invention includes but is not limited to the iCloud. For example, the device may also be an Android mobile phone, and the server may also be a Google Play server.

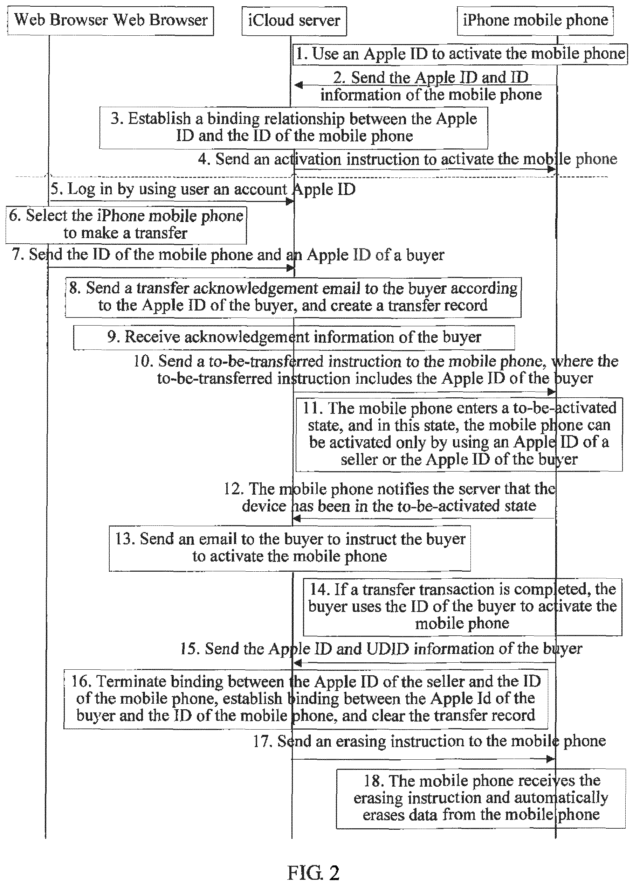

FIG. 2 is a signaling diagram of a method for managing a device according to another embodiment of the present invention. As shown in FIG. 2, the method in this embodiment may include:
1. A seller uses Apple ID information of the seller to request online activation of an iPhone mobile phone.
   The Apple ID information of the seller is an Apple ID and a password. During activation, the Apple ID information of the seller is sent to a server for activation. After the iPhone mobile phone is activated, the server stores a binding relationship between the Apple ID information of the seller and ID information of the iPhone mobile phone.
2. The iPhone mobile phone sends the Apple ID information of the seller and the ID information of the iPhone mobile phone to an iCloud server.
3. After the iCloud server verifies the received Apple ID information of the seller successfully, the iCloud server establishes and stores a binding relationship between the Apple ID information of the seller and the ID information of the iPhone mobile phone.
4. The iCloud server sends an activation instruction to the iPhone mobile phone, where the activation instruction is used to instruct the iPhone mobile phone to use the Apple ID information of the seller to activate the iPhone mobile phone.
   Specifically, after step 4, the iCloud server establishes the binding relationship between the Apple ID information of the seller and the ID information of the iPhone mobile phone. Then, the iPhone mobile phone can be normally used.
5. The seller uses the Apple ID of the seller to log in to the iCloud server by using a web browser.
6. The seller selects, by using the web browser, a device to make a transfer.
   For example, the seller selects, by using the web browser, the iPhone mobile phone that is activated in step 1 to make a transfer, and meanwhile, the seller needs to provide Apple ID information of a buyer who buys the iPhone mobile phone.
7. The web browser sends a transfer request to the iCloud server, where the transfer request includes the ID information of the iPhone mobile phone and the ID information of the buyer.
8. The iCloud server sends a notification email to the buyer according to the Apple ID information of the buyer in the transfer request.
   For example, the notification email includes a uniform resource locator (Uniform Resource Locator, URL), so that after receiving the notification email, the buyer acknowledges, by clicking the URL, that the buyer agrees to buy the device.
9. The iCloud server receives acknowledgement information of the buyer.
   The iCloud server can determine an identity of the buyer and continue to perform a transfer operation.
10. The iCloud server sends a to-be-transferred instruction to the iPhone mobile phone, where the to-be-transferred instruction includes the Apple ID information of the buyer.
11. The iPhone mobile phone enters a to-be-activated state according to the received to-be-transferred instruction sent by the iCloud server.
   When the device enters the to-be-activated state, the device can perform online activation only by using the Apple ID information of the seller or the Apple ID information of the buyer.
12. At the same time when the iPhone mobile phone enters the to-be-activated state, the iPhone mobile phone sends acknowledgement information to notify the iCloud server that the iPhone mobile phone has entered the to-be-activated state.
13. After receiving the acknowledgement information from the iPhone mobile phone, the iCloud server sends an email to the buyer and notifies the buyer that the buyer can use the Apple ID information of the buyer to activate the iPhone mobile phone.
14. After receiving the email, the buyer can enter the Apple ID information of the buyer on the iPhone mobile phone to request online activation of the iPhone mobile phone.
15. The iPhone mobile phone sends the Apple ID information of the buyer and the ID information of the iPhone mobile phone to the iCloud server.
16. After the iCloud server receives the Apple ID information of the buyer and the ID information of the iPhone mobile phone that are sent by the iPhone mobile phone, and verifies the Apple ID information of the buyer successfully, the iCloud server terminates the binding relationship between the Apple ID information of the seller and the ID information of the iPhone mobile phone, and establishes a binding relationship between the Apple ID information of the buyer and the ID information of the iPhone mobile phone.
17. The iCloud server sends a transfer activation instruction to the iPhone mobile phone, where the transfer activation instruction is used to instruct the iPhone mobile phone to erase user data of the seller from the iPhone mobile phone and use the Apple ID information of the buyer to activate the iPhone mobile phone.
18. The iPhone mobile phone erases the user data of the seller from the iPhone mobile phone according to the received transfer activation instruction sent by the iCloud server, and uses the Apple ID information of the buyer to activate the iPhone mobile phone.

It should be noted that, it is assumed that the transfer does not succeed, in the foregoing step 14, the Apple ID information for activating the iPhone mobile phone is the Apple ID information of the seller; in step 15, activation information sent by the iPhone mobile phone is the Apple ID information of the seller and the ID information of the iPhone mobile phone; in step 16, the iCloud server still reserves the binding relationship between the Apple ID information of the seller and the ID information of the iPhone mobile phone, and the iPhone mobile phone is activated by using the Apple ID information of the seller; in step 17, the iCloud server sends the activation instruction to the iPhone mobile phone, where the activation instruction is used to activate the iPhone mobile phone only by using the Apple ID information of the seller, and the user data of the seller reserved in the iPhone mobile phone is not erased; and in step 18, after receiving the activation instruction, the iPhone mobile phone only uses the Apple ID information of the seller to activate the iPhone mobile phone, and the user data of the seller reserved in the iPhone mobile phone is not erased.

In the foregoing, that the device is an iPhone and the server is an iCloud is used as an example to describe the specific procedure of this embodiment of the present invention in detail. When a seller requests a device transfer from a server, a to-be-transferred instruction may be sent to a device by the server, so as to enable the device to be in a to-be-activated state. User information of a buyer can be used to activate the device only when a transaction succeeds, or user information of the seller can be used to activate the device only when a transaction does not succeed. Even if the device is stolen or lost, a third person cannot activate or use the device. When the transaction succeeds, the server deletes a correspondence between the user information of the seller and information about the device, so that the seller making a legal transfer cannot maliciously clear user data of the buyer, and therefore, security for using the transferred device by the buyer is ensured.

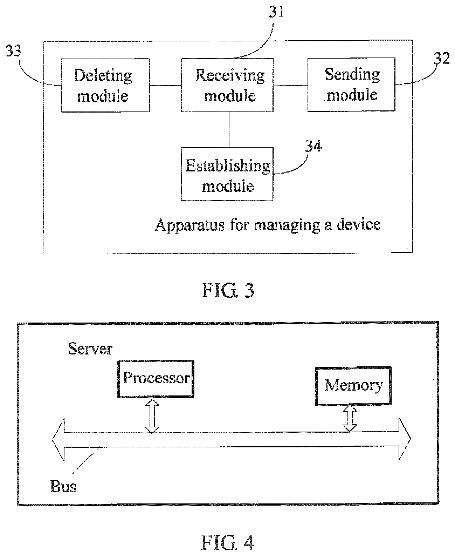

FIG. 3 is a schematic structural diagram of an apparatus for managing a device according to an embodiment of the present invention. As shown in FIG. 3, the apparatus for managing a device in this embodiment is located on a server side, a binding relationship between the device and transferor information of the device is stored in a server, and the apparatus specifically includes:
a receiving module 31, configured to receive a device transfer request message, where the device transfer request message includes transferee information of the device and information about the device; and
a sending module 32, configured to send a to-be-transferred instruction to the device according to the device transfer request message, where the to-be-transferred instruction includes the transferee information of the device; the to-be-transferred instruction is used to instruct the device to set an activated state of the device to a to-be-activated state; and after the device is set to the to-be-activated state, the device can be activated only by using specified user information, where the specified user information includes the transferor information of the device and/or the transferee information of the device.

Optionally, the receiving module 31 is further configured to receive a first activation request message sent by the device, where the first activation request message includes the transferee information of the device and the information about the device; and
the apparatus further includes:
a deleting module 33, configured to delete, according to the first activation request message, the binding relationship between the device and the transferor information of the device stored in the server; and
an establishing module 34, configured to establish a binding relationship between the device and the transferee information of the device according to the first activation request message.

Optionally, the sending module 32 is further configured to send a first activation instruction to the device, where the first activation instruction is used to instruct the device to delete user data of a transferor of the device saved in the device and use the transferee information of the device to activate the device.

Optionally, the receiving module 31 is further configured to receive a second activation request message sent by the device, where the second activation request message includes the transferor information of the device and the information about the device; and
the sending module 32 is further configured to send a second activation instruction to the device, where the second activation instruction is used to instruct the device to use the transferor information of the device to activate the device.

Optionally, the sending module 32 is further configured to send, according to the transferee information of the device, a transfer acknowledgement request message to a terminal of a transferee to which the transferee information points, so that the terminal of the transferee sends a transfer acknowledgement response message to the server; and
the sending module 32 is further configured to send the to-be-transferred instruction to the device according to the transfer acknowledgement response message.

The apparatus described in this embodiment of the present invention may execute the method described in the embodiment shown in FIG. 1. For technical implementation processes and technical effects, reference may be made to detailed content in the embodiment shown in FIG. 1, and details are not described herein again.

FIG. 4 is a schematic structural diagram of a server according to an embodiment of the present invention. A binding relationship between a device and transferor information of the device is stored in the server in this embodiment. As shown in FIG. 4, the server includes a processor and a memory, where the processor and the memory are connected by using a communications bus; an instruction for implementing the method for managing a device in the embodiment shown in FIG. 1 is stored in the memory; and the processor may invoke the instruction in the memory to execute the method for managing a device in the embodiment shown in FIG. 1.

The apparatus described in this embodiment of the present invention may execute the method described in the embodiment shown in FIG. 1. For technical implementation processes and technical effects, reference may be made to detailed content in the embodiment shown in FIG. 1, and details are not described herein again.

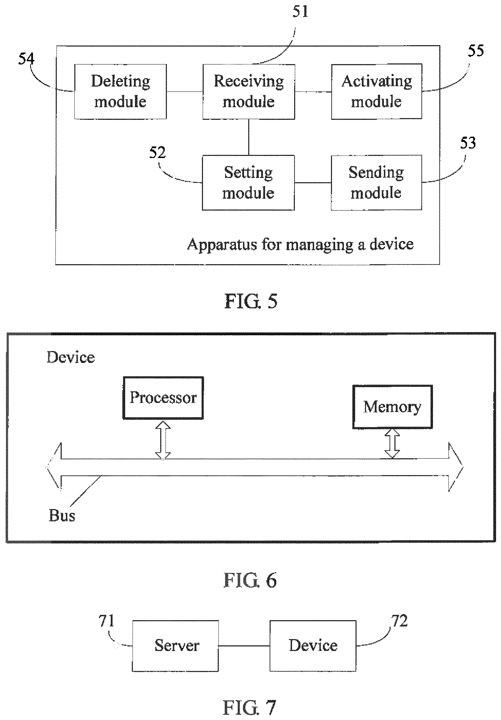

FIG. 5 is a schematic structural diagram of an apparatus for managing a device according to an embodiment of the present invention. The apparatus for managing a device in this embodiment is located on a device side and a binding relationship between the device and transferor information of the device is stored in a server in this embodiment. As shown in FIG. 5, the apparatus includes:
a receiving module 51, configured to receive a to-be-transferred instruction sent by the server, where the to-be-transferred instruction includes transferee information of the device; and
a setting module 52, configured to set an activated state of the device to a to-be-activated state according to the to-be-transferred instruction, where
the to-be-transferred instruction is a to-be-transferred instruction that is sent by the server, after receiving a device transfer request message, to the device according to the transferee information of the device and information about the device that are included in the device transfer request message.

Optionally, the apparatus further includes:
a sending module 53, configured to send a first activation request message to the server, where the first activation request message includes the transferee information of the device and the information about the device, so that the server deletes, according to the first activation request message, the binding relationship between the device and the transferor information of the device stored in the server, and establishes a binding relationship between the device and the transferee information of the device according to the first activation request message.

Optionally, the receiving module 51 is further configured to receive a first activation instruction sent by the server; and
the apparatus further includes:
a deleting module 54, configured to delete, according to the first activation instruction, user data of a transferor of the device saved in the device; and
an activating module 55, configured to use, according to the first activation instruction, the transferee information of the device to activate the device.

Optionally, the sending module 53 is further configured to send a second activation request message to the server, where the second activation request message includes the transferor information of the device and the information about the device, so that the server sends a second activation instruction to the device, where the second activation instruction is used to instruct the device to use the transferor information of the device to activate the device; and
the activating module 55 is further configured to use, according to the second activation instruction, the transferor information of the device to activate the device.

The apparatus described in this embodiment of the present invention may execute the method described in the embodiment shown in FIG. 1. For technical implementation processes and technical effects, reference may be made to detailed content in the embodiment shown in FIG. 1, and details are not described herein again.

FIG. 6 is a schematic structural diagram of a device according to an embodiment of the present invention. As shown in FIG. 6, the device includes a processor and a memory, where the processor and the memory are connected by using a communications bus; an instruction for implementing the method for managing a device in the embodiment shown in FIG. 1 is stored in the memory; and the processor may invoke the instruction in the memory to execute the method for managing a device in the embodiment shown in FIG. 1.

The apparatus described in this embodiment of the present invention may execute the method described in the embodiment shown in FIG. 1. For technical implementation processes and technical effects, reference may be made to detailed content in the embodiment shown in FIG. 1, and details are not described herein again.

FIG. 7 is a schematic structural diagram of a system for managing a device according to an embodiment of the present invention. As shown in FIG. 7, the system includes a server 71 and a device 72 that is connected to the server 71, where the server includes the apparatus for managing a device in the embodiment shown in FIG. 3, and the device includes the apparatus for managing a device in the embodiment shown in FIG. 5.

The system described in this embodiment of the present invention may execute the method described in the embodiment shown in FIG. 1. For technical implementation processes and technical effects, reference may be made to detailed content in the embodiment shown in FIG. 1, and details are not described herein again.

It may be clearly understood by persons skilled in the art that, for the purpose of convenient and brief description, for a specific working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The foregoing software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a removable hard disk, a read-only memory (Read-Only Memory, ROM for short), a random access memory (Random Access Memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments; however, these modifications or replacements do not make the essence of corresponding technical solutions depart from the protection scope of the technical solutions in the embodiments of the present invention.

## Claims

1. A method performed by a server to manage a device transfer, wherein a device is to be transferred from a transferor of the device to a transferee of the device, and the method comprises:
receiving, by the server, a third activation request message from the device, wherein the third activation request message includes transferor information and information about the device, the transferor information includes ID information of the transferor and the ID information of the transferor includes an ID and a password;
establishing and storing, by the server, a binding relationship between the device and the transferor information according to the third activation request message;
sending, by the server, a third activation instruction to the device, wherein the third activation instruction is used to instruct the device to use the transferor information to activate the device;
receiving (101), by the server, a device transfer request message sent by a web browser used by the transferor, wherein the device transfer request message comprises transferee information and the information about the device, wherein the transferee information includes ID information of the transferee, the information about the device includes an identity that uniquely identifies the device; and
sending (102), by the server, a to-be-transferred instruction to the device according to the device transfer request message, wherein the to-be-transferred instruction comprises the transferee information ; wherein the to-be-transferred instruction is adapted to cause the device to set (103) an activated state of the device to a to-be-activated state, wherein setting the device to the to-be-activated state means that the device can be activated only by using the transferor information or the transferee information;
wherein the sending (102), by the server, a to-be-transferred instruction to the device according to the device transfer request message comprises:
sending, by the server, a notification email to the transferee according to the ID information of the transferee in the device transfer request message;
receiving, by the server, acknowledgement information of the transferee in response to the notification email; and
sending, by the server, the to-be-transferred instruction to the device according to the acknowledgement information of the transferee, wherein the to-be-transferred instruction includes the ID information of the transferee; and
after the sending (102), by the server, the to-be-transferred instruction to the device according to the device transfer request message, the method further comprises:
receiving, by the server, a first activation request message sent by the device , wherein the first activation request message comprises the transferee information and the information about the device;
deleting (105), by the server according to the first activation request message, the binding relationship between the device and the transferor information stored in the server;
establishing, by the server, a binding relationship between the device and the transferee information according to the first activation request message; and
after the establishing, by the server, a binding relationship between the device and the transferee information,
sending, by the server, a first activation instruction to the device, wherein the first activation instruction is used to instruct the device to delete user data of a transferor of the device saved in the device and use the transferee information to activate the device; or
after the sending (102), by the server, a to-be-transferred instruction to the device according to the device transfer request message, the method further comprises:
receiving, by the server, a second activation request message sent by the device, wherein the second activation request message comprises the transferor information and the information about the device; and
sending (108), by the server, a second activation instruction to the device, wherein the second activation instruction is used to instruct the device to use the transferor information to activate the device.

2. An apparatus for a server to manage a device transfer, wherein the apparatus is located on the server side, wherein a device is to be transferred from a transferor of the device to a transferee of the device, and the apparatus comprises modules for implementing the method according to claim 1.

3. A method for managing a device transfer, wherein a device is to be transferred from a transferor of the device to a transferee of the device, and the method comprises:
sending, by the device, a third activation request message to a server, wherein the third activation request message includes transferor information and information about the device, the transferor information includes ID information of the transferor and the ID information of the transferor includes an ID and a password, and the information about the device includes an identity that uniquely identifies the device;
receiving, by the device, a third activation instruction from the server, wherein the third activation instruction is used to instruct the device to use the transferor information to activate the device, wherein the third activation instruction is sent by the sever after establishing and storing, by the server, a binding relationship between the device and the transferor information according to the third activation request message;
receiving, by the device, a to-be-transferred instruction sent by the server, wherein the to-be-transferred instruction comprises transferee information, wherein the transferee information includes ID information of the transferee; and
setting (103), by the device, an activated state of the device to a to-be-activated state according to the to-be-transferred instruction, received by the device, wherein
the to-be-transferred instruction is a to-be-transferred instruction that is sent by the server, after receiving a device transfer request message, to the device according to the transferee information and the information about the device that are comprised in the device transfer request message, wherein setting the device to the to-be-activated state means that the device can be activated only by using the transferor information or the transferee information;
wherein after the setting (103), by the device, an activated state of the device to a to-be-activated state, the method comprises:
when receiving, by the device, a request for activating the device comprising the ID information of the transferee, sending (104), by the device, a first activation request message to the server, wherein the first activation request message comprises the transferee information and the information about the device, so that the server deletes, according to the first activation request message, the binding relationship between the device and the transferor information stored in the server, and establishes a binding relationship between the device and the transferee information according to the first activation request message;
receiving, by the device, a first activation instruction sent by the server; and
deleting (105), by the device, according to the first activation instruction, user data of a transferor of the device saved in the device, and using, according to the first activation instruction, the transferee information to activate the device; or
wherein after the setting (103), by the device, an activated state of the device to a to-be-activated state, the method further comprises:
when receiving, by the device, a request for activating the device comprising the ID information of the transferor, sending (108), by the device, a second activation request message to the server, wherein the second activation request message comprises the transferor information and the information about the device, so that the server sends a second activation instruction to the device, wherein the second activation instruction is used to instruct the device to use the transferor information to activate the device; and
using (110), by the device according to the second activation instruction, the transferor information to activate the device.

4. An apparatus for a device to manage a device transfer, wherein the device is to be transferred from a transferor of the device to a transferee of the device, wherein the apparatus is located on the device side, and the apparatus comprises modules for implementing the method according to claim 3.

## Patentansprüche

1. Verfahren, durchgeführt durch einen Server, zum Verwalten einer Einrichtungsübertragung, wobei eine Einrichtung von einem Abtretenden der Einrichtung zu einem Übernehmer der Einrichtung übertragen werden soll und das Verfahren umfasst:
Empfangen, durch den Server, einer dritten Aktivierungsanforderungsnachricht von der Einrichtung, wobei die dritte Aktivierungsanforderungsnachricht Abtreterinformation und Information zu der Einrichtung aufweist, die Abtreterinformation ID-Information des Abtretenden aufweist und die ID-Information des Abtretenden eine ID und ein Passwort aufweist;
Aufbauen und Speichern, durch den Server, einer Bindungsbeziehung zwischen der Einrichtung und der Abtreterinformation entsprechend der dritten Aktivierungsanforderungsnachricht;
Senden einer dritten Aktivierungsanweisung durch den Server zu der Einrichtung, wobei die dritte Aktivierungsanweisung verwendet wird, um die Einrichtung anzuweisen, die Abtreterinformation zum Aktivieren der Einrichtung zu verwenden;
Empfangen (101) einer von einem durch den Abtretenden verwendeten Web-Browser gesendeten Einrichtungsübertragungs-Anforderungsnachricht durch den Server, wobei die Einrichtungsübertragungs-Anforderungsnachricht Übernehmerinformation und die Information zu der Einrichtung umfasst, wobei die Übernehmerinformation ID-Information des Übernehmers aufweist und die Information zu der Einrichtung eine Identität aufweist, die die Einrichtung eindeutig identifiziert; und
Senden (102) einer zu übertragenden Anweisung durch den Server zu der Einrichtung entsprechend der Einrichtungsübertragungs-Anforderungsnachricht, wobei die zu übertragende Anweisung die Übernehmerinformation umfasst; wobei die zu übertragende Anweisung eingerichtet ist, um die Einrichtung zu veranlassen, einen aktivierten Status der Einrichtung auf einen zu aktivierenden Status einzustellen (103), wobei das Einstellen der Einrichtung auf den zu aktivierenden Status bedeutet, dass die Einrichtung nur unter Verwendung der Abtreterinformation oder der Übernehmerinformation aktiviert werden kann;
wobei das Senden (102) einer zu übertragenden Anweisung durch den Server zu der Einrichtung entsprechend der Einrichtungsübertragungs-Anforderungsnachricht umfasst:
Senden einer Benachrichtigungs-E-Mail durch den Server zu dem Übernehmer entsprechend der ID-Information des Übernehmers in der Einrichtungsübertragungs-Anforderungsnachricht;
Empfangen von Quittierungsinformation des Übernehmers durch den Server in Reaktion auf die Benachrichtigungs-E-Mail; und
Senden der zu übertragenden Anweisung durch den Server zu der Einrichtung entsprechend der Akkreditierungsinformation des Übernehmers, wobei die zu übertragende Anweisung die ID-Information des Übernehmers aufweist und das Verfahren nach dem Senden (102) der zu übertragenden Anweisung von dem Server zu der Einrichtung entsprechend der Einrichtungsübertragungs-Anforderungsnachricht ferner umfasst:
Empfangen einer ersten von der Einrichtung gesendeten Aktivierungsanforderungsnachricht, wobei die erste Aktivierungsanforderungsnachricht die Übernehmerinformation und die Information zu der Einrichtung umfasst;
Löschen (105), durch den Server entsprechend der ersten Aktivierungsanforderungsnachricht, der in dem Server gespeicherten Bindungsbeziehung zwischen der Einrichtung und der Abtreterinformation;
Aufbauen einer Bindungsbeziehung zwischen der Einrichtung und der Übernehmerinformation durch den Server entsprechend der ersten Aktivierungsanforderungsnachricht; und nach dem Aufbau einer Bindungsbeziehung zwischen der Einrichtung und der Übernehmerinformation durch den Server,
Senden einer ersten Aktivierungsanweisung durch den Server zu der Einrichtung, wobei die erste Aktivierungsanweisung verwendet wird, um die Einrichtung anzuweisen, in der Einrichtung gespeicherte Benutzerdaten eines Abtretenden der Einrichtung zu löschen und die Übernehmerinformation zum Aktivieren der Einrichtung zu verwenden; oder
wobei das Verfahren nach dem Senden (102) einer zu übertragenden Anweisung durch den Server zu der Einrichtung entsprechend der Einrichtungsübertragungs-Anforderungsnachricht ferner umfasst:
Empfangen einer zweiten von der Einrichtung gesendeten Aktivierungsanforderungsnachricht durch den Server, wobei die zweite Aktivierungsanforderungsnachricht die Abtreterinformation und die Information zu der Einrichtung umfasst; und
Senden (108) einer zweiten Aktivierungsanweisung durch den Server zu der Einrichtung, wobei die zweite Aktivierungsanweisung verwendet wird, um die Einrichtung anzuweisen, die Abtreterinformation zum Aktivieren der Einrichtung zu verwenden.

2. Vorrichtung für einen Server zum Verwalten einer Einrichtungsübertragung, wobei die Vorrichtung auf der Serverseite positioniert ist, wobei eine Einrichtung von einem Abtretenden der Einrichtung zu einem Übernehmer der Einrichtung übertragen werden soll und die Vorrichtung Module zum Implementieren des Verfahrens nach Anspruch 1 umfasst.

3. Verfahren zum Verwalten einer Einrichtungsübertragung, wobei eine Einrichtung von einem Abtretenden der Einrichtung zu einem Übernehmer der Einrichtung übertragen werden soll und das Verfahren umfasst:
Senden einer dritten Aktivierungsanforderungsnachricht durch die Einrichtung zu einem Server, wobei die dritte Aktivierungsanforderungsnachricht Abtreterinformation und Information zu der Einrichtung aufweist, die Abtreterinformation ID-Information des Abtretenden aufweist und die ID-Information des Abtretenden eine ID und ein Passwort aufweist und die Information zu der Einrichtung eine Identität aufweist, die die Einrichtung eindeutig identifiziert;
Empfangen einer dritten Aktivierungsanforderung von dem Server durch die Einrichtung, wobei die dritte Aktivierungsanforderung verwendet wird, um die Einrichtung anzuweisen, die Abtreterinformation zum Aktivieren der Einrichtung zu verwenden, wobei die dritte Aktivierungsanforderung von dem Server gesendet wird, nachdem der Server eine Bindungsbeziehung zwischen der Einrichtung und der Abtreterinformation entsprechend der dritten Aktivierungsanforderungsnachricht aufgebaut und gespeichert hat;
Empfangen einer durch den Server gesendeten zu übertragenden Anweisung durch die Einrichtung, wobei die zu übertragende Anweisung Übernehmerinformation umfasst, wobei die Übernehmerinformation ID-Information des Übernehmers aufweist; und
Einstellen (103) eines aktivierten Status der Einrichtung durch die Einrichtung auf einen zu aktivierenden Status entsprechend der von der Einrichtung empfangenen zu übertragenden Anweisung, wobei
die zu übertragende Anweisung eine zu übertragende Anweisung ist, die durch den Server nach dem Empfang einer Einrichtungsübertragungs-Anforderungsnachricht zu der Einrichtung entsprechend der Übernehmerinformation und der Information zu der Einrichtung, die in der Einrichtungsübertragungs-Anforderungsnachricht umfasst sind, gesendet wird, wobei das Einstellen der Einrichtung auf den zu aktivierenden Status bedeutet, dass die Einrichtung nur unter Verwendung der Abtreterinformation oder der Übernehmerinformation aktiviert werden kann;
wobei das Verfahren nach dem Einstellen (103) eines aktivierten Status der Einrichtung auf einen zu aktivierenden Status durch die Einrichtung umfasst:
Beim Empfang einer Anforderung durch die Einrichtung zum Aktivieren der Einrichtung, umfassend die ID-Information des Übernehmers: Senden (104) einer ersten Aktivierungsanforderungsnachricht durch die Einrichtung zu dem Server, wobei die erste Aktivierungsanforderungsnachricht die Übernehmerinformation und die Information zu der Einrichtung umfasst, sodass der Server entsprechend der ersten Aktivierungsanforderungsnachricht die in dem Server gespeicherte Bindungsbeziehung zwischen der Einrichtung und der Abtreterinformation löscht und eine Bindungsbeziehung zwischen der Einrichtung und der Übernehmerinformation entsprechend der ersten Aktivierungsanforderungsnachricht aufbaut;
Empfangen einer ersten durch den Server gesendeten Aktivierungsanforderung durch die Einrichtung; und
Löschen (105) von in der Einrichtung gespeicherten Benutzerdaten eines Abtretenden der Einrichtung durch die Einrichtung entsprechend der ersten Aktivierungsanforderung und Verwenden der Übernehmerinformation zum Aktivieren der Einrichtung entsprechend der ersten Aktivierungsanforderung; oder
wobei das Verfahren nach dem Einstellen (103) eines aktivierten Status der Einrichtung auf einen zu aktivierenden Status durch die Einrichtung ferner umfasst:
Beim Empfang einer Anforderung durch die Einrichtung zum Aktivieren der Einrichtung, umfassend die ID-Information des Abtretenden: Senden (108) einer zweiten Aktivierungsanforderungsnachricht zu dem Server, wobei die zweite Aktivierungsanforderungsnachricht die Abtreterinformation und die Information zu der Einrichtung umfasst, sodass der Server eine zweite Aktivierungsanforderungsnachricht zu der Einrichtung sendet, wobei die zweite Aktivierungsanforderung verwendet wird, um die Einrichtung anzuweisen, die Abtreterinformation zum Aktivieren der Einrichtung zu verwenden; und
Verwenden (110) der Abtreterinformation zum Aktivieren der Einrichtung durch die Einrichtung entsprechend der zweiten Aktivierungsanforderung.

4. Vorrichtung für eine Einrichtung zum Verwalten einer Einrichtungsübertragung, wobei die Einrichtung von einem Abtretenden der Einrichtung zu einem Übernehmer der Einrichtung übertragen werden soll, wobei die Vorrichtung auf der Einrichtungsseite positioniert ist und die Vorrichtung Module zum Implementieren des Verfahrens nach Anspruch 3 umfasst.

## Revendications

1. Procédé réalisé par un serveur destiné à gérer un transfert de dispositif, un dispositif devant être transféré d'un émetteur du transfert du dispositif à un destinataire du transfert du dispositif, et le procédé comprenant :
la réception, par le serveur, d'un troisième message de demande d'activation en provenance du dispositif, le troisième message de demande d'activation comprenant des informations d'émetteur du transfert et des informations concernant le dispositif, les informations d'émetteur du transfert comprenant des informations d'identifiant de l'émetteur du transfert et les informations d'identifiant de l'émetteur du transfert comprenant un identifiant et un mot de passe ;
l'établissement et le stockage, par le serveur, d'une relation de liaison entre le dispositif et les informations d'émetteur du transfert selon le troisième message de demande d'activation ;
l'envoi, par le serveur, d'une troisième instruction d'activation au dispositif, la troisième instruction d'activation étant utilisée pour ordonner au dispositif d'utiliser les informations d'émetteur du transfert pour activer le dispositif ;
la réception (101), par le serveur, d'un message de demande de transfert de dispositif envoyé par un navigateur Web utilisé par l'émetteur du transfert, le message de demande de transfert de dispositif comprenant des informations de destinataire du transfert et les informations concernant le dispositif, les informations de destinataire du transfert comprenant des informations d'identifiant du destinataire du transfert, les informations concernant le dispositif comprenant une identité qui identifie le dispositif de manière unique ; et
l'envoi (102), par le serveur, d'une instruction devant être transférée au dispositif selon le message de demande de transfert de dispositif, l'instruction devant être transférée comprenant les informations de destinataire du transfert du transfert ;
l'instruction devant être transférée étant adaptée pour amener le dispositif à régler (103) un état activé du dispositif à un état devant être activé, réglage du dispositif à l'état devant être activé signifiant que le dispositif ne peut être activé qu'en utilisant les informations d'émetteur du transfert ou les informations de destinataire du transfert ;
l'envoi (102), par le serveur, d'une instruction devant être transférée au dispositif selon le message de demande de transfert de dispositif comprenant :
l'envoi, par le serveur, d'un e-mail de notification au destinataire du transfert selon les informations d'identifiant du destinataire du transfert dans le message de demande de transfert de dispositif ;
la réception, par le serveur, des informations d'accusé de réception du destinataire du transfert en réponse à l'e-mail de notification ; et
l'envoi, par le serveur, de l'instruction devant être transférée au dispositif selon les informations d'accusé de réception du destinataire du transfert, l'instruction devant être transférée comprenant les informations d'identifiant du destinataire du transfert ; et
après l'envoi (102), par le serveur, de l'instruction devant être transférée au dispositif selon le message de demande de transfert de dispositif, le procédé comprenant en outre :
la réception, par le serveur, d'un premier message de demande d'activation envoyé par le dispositif, le premier message de demande d'activation comprenant les informations de destinataire du transfert du transfert et les informations concernant le dispositif ;
la suppression (105), par le serveur selon le premier message de demande d'activation, de la relation de liaison entre le dispositif et les informations d'émetteur du transfert stockées sur le serveur ;
l'établissement, par le serveur, d'une relation de liaison entre le dispositif et les informations de destinataire du transfert du transfert selon le premier message de demande d'activation ; et
après l'établissement, par le serveur, d'une relation de liaison entre le dispositif et les informations de destinataire du transfert du transfert,
l'envoi, par le serveur, d'une première instruction d'activation au dispositif, la première instruction d'activation étant utilisée pour ordonner au dispositif d'effacer les données d'utilisateur d'un émetteur du transfert du dispositif enregistré dans le dispositif et d'utiliser les informations de destinataire du transfert pour activer le dispositif ; ou
après l'envoi (102), par le serveur, d'une instruction devant être transférée au dispositif selon le message de demande de transfert de dispositif, le procédé comprenant en outre : la réception, par le serveur, d'un deuxième message de demande d'activation envoyé par le dispositif, le deuxième message de demande d'activation comprenant les informations d'émetteur du transfert et les informations concernant le dispositif ; et
l'envoi (108), par le serveur, d'une deuxième instruction d'activation au dispositif, la deuxième instruction d'activation étant utilisée pour ordonner au dispositif d'utiliser les informations d'émetteur du transfert pour activer le dispositif.

2. Appareil pour un serveur destiné à gérer un transfert de dispositif, l'appareil étant situé du côté du serveur, un dispositif devant être transféré d'un émetteur du transfert du dispositif à un destinataire du transfert du dispositif, et l'appareil comprenant des modules pour mettre en œuvre le procédé selon la revendication 1.

3. Procédé de gestion d'un transfert de dispositif, un dispositif devant être transféré d'un émetteur du transfert du dispositif à un destinataire du transfert du dispositif, et le procédé comprenant :
l'envoi, par le dispositif, d'un troisième message de demande d'activation à un serveur, le troisième message de demande d'activation incluant des informations d'émetteur du transfert et des informations concernant le dispositif, les informations d'émetteur du transfert comprenant des informations d'identifiant de l'émetteur du transfert et les informations d'identifiant de l'émetteur du transfert comprenant un identifiant et un mot de passe et les informations concernant le dispositif comprenant une identité qui identifie le dispositif de manière unique ;
la réception, par le dispositif, d'une troisième instruction d'activation du serveur, la troisième instruction d'activation étant utilisée pour ordonner au dispositif d'utiliser les informations d'émetteur du transfert pour activer le dispositif, la troisième instruction d'activation étant envoyée par le serveur après établissement et stockage, par le serveur, d'une relation de liaison entre le dispositif et les informations d'émetteur du transfert selon le troisième message de demande d'activation ;
la réception, par le dispositif, d'une instruction devant être transférée envoyée par le serveur, l'instruction devant être transférée comprenant des informations de destinataire du transfert du transfert, les informations de destinataire du transfert du transfert comprenant des informations d'identifiant du destinataire du transfert du transfert ; et
le réglage (103), par le dispositif, d'un état activé du dispositif à un état devant être activé selon l'instruction devant être transférée, reçue par le dispositif,
l'instruction devant être transférée étant une instruction devant être transférée qui est envoyée par le serveur, après avoir reçu un message de demande de transfert de dispositif, au dispositif selon les informations de destinataire du transfert et les informations concernant le dispositif qui sont comprises dans le message de demande de transfert de dispositif, le réglage du dispositif à l'état devant être activé signifiant que le dispositif ne peut être activé qu'en utilisant les informations d'émetteur du transfert ou les information de destinataire du transfert ;
après le réglage (103), par le dispositif, d'un état activé du dispositif à un état devant être activé, le procédé comprenant :
lors de la réception, par le dispositif, d'une demande d'activation du dispositif comprenant les informations d'identifiant du destinataire du transfert, l'envoi (104), par le dispositif, d'un premier message de demande d'activation au serveur, le premier message de demande d'activation comprenant les informations de destinataire du transfert et les informations concernant le dispositif, de sorte que le serveur supprime, selon le premier message de demande d'activation, la relation de liaison entre le dispositif et les informations d'émetteur du transfert enregistrées dans le serveur, et établit une relation de liaison entre le dispositif et les informations de destinataire du transfert selon le premier message de demande d'activation ;
la réception, par le dispositif, d'une première instruction d'activation envoyée par le serveur ; et la suppression (105), par le dispositif, selon la première instruction d'activation, des données utilisateur d'un émetteur du transfert du dispositif enregistrées dans le dispositif, et l'utilisation, selon la première instruction d'activation, des informations de destinataire du transfert pour activer le dispositif ; ou
après le réglage (103), par le dispositif, d'un état activé du dispositif à un état devant être activé, le procédé comprenant en outre :
lors de la réception, par le dispositif, d'une demande d'activation du dispositif comprenant les informations d'identifiant de l'émetteur du transfert, l'envoi (108), par le dispositif, d'un deuxième message de demande d'activation au serveur, le deuxième message de demande d'activation comprenant les informations d'émetteur du transfert et les informations concernant le dispositif, de sorte que le serveur envoie une deuxième instruction d'activation au dispositif, la deuxième instruction d'activation étant utilisée pour ordonner au dispositif d'utiliser les informations d'émetteur du transfert pour activer le dispositif ; et
l'utilisation (110), par le dispositif selon la deuxième instruction d'activation, des informations d'émetteur du transfert pour activer le dispositif.

4. Appareil pour un dispositif destiné à gérer un transfert de dispositif, le dispositif devant être transféré d'un émetteur du transfert du dispositif à un destinataire du transfert du dispositif, l'appareil étant situé du côté du dispositif, et l'appareil comprenant des modules pour mettre en œuvre le procédé selon la revendication 3.
